(19)

Europäisches
Patentamt
European
Patent Office
Office européen
des brevets

(11) **EP 3 879 786 A1**

(12) **EUROPEAN PATENT APPLICATION**
published in accordance with Art. 153(4) EPC

(43) Date of publication:
**15.09.2021 Bulletin 2021/37**

(21) Application number: **18940424.7**

(22) Date of filing: **10.12.2018**

(51) Int Cl.:
**H04L 29/08** (2006.01)

(86) International application number:
**PCT/CN2018/120101**

(87) International publication number:
**WO 2020/098030 (22.05.2020 Gazette 2020/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.11.2018 CN 201811340787**
**21.11.2018 CN 201811393124**

(71) Applicant: **Wangsu Science & Technology Co.,
Ltd.**
**Shanghai 201800 (CN)**

(72) Inventor: **LIN, Pengcheng**
**Shanghai 201800 (CN)**

(74) Representative: **De Arpe Tejero, Manuel**
**Arpe Patentes y Marcas**
**Alcalá, 26, 5a Planta**
**28014 Madrid (ES)**

(54) **SCHEDULING METHOD FOR REQUEST TASK AND SCHEDULING CENTER SERVER**

(57)     A scheduling method of a request task and a scheduling center server are provided in the present disclosure. The method includes receiving node information reported by to-be-scheduled CDN nodes and constructing a plurality of training samples based on the node information, creating a support vector machine (SVM) model including a specified number of binary classifiers, where the specified number is determined based on a total number of the to-be-scheduled CDN nodes, performing a plurality of rounds of training to the SVM model by using the plurality of constructed training samples and generating correspondingly a weak classifier having a weight value after each round of training, and combining each of the weak classifiers into a final classifier based on a weight value of each of the weak classifiers and scheduling a received new request task among the to-be-scheduled CDN nodes using the final classifier. The technical solution of the present disclosure can improve a scheduling precision of the request task.

FIG. 1

EP 3 879 786 A1

**Description**

**TECHNICAL FIELD**

The present disclosure relates to internet technology field and, more particularly, to a scheduling method of a request task and a scheduling center server.

**BACKGROUND**

With rise of live stream industry, to provide users with a smooth video live stream experience, a content delivery network (CDN) is often selected for the live stream service to share live streams and accelerate the live streams.

At present, when the CDN control center receives a request task from a user for loading the live streams, a CDN node that is suitable for processing the request task can be determined according to a load number, a stall rate, and other parameters of each CDN node in a current network, and the request task is scheduled to the determined CDN node.

However, the current scheduling methods for the request tasks are based on a single judgment basis for the CDN nodes, which may cause a misjudgment and cause an uneven distribution of the request tasks. Once another judgment basis is added, the judgment process will become too complicated. At present, there is no suitable solution to deal with the complicated judgment process.

**SUMMARY**

The purpose of the present disclosure is to provide a scheduling method of a request task and a scheduling center server, which can improve a scheduling accuracy of the request task.

To achieve the above purpose, one aspect of the present disclosure provides a scheduling method of a request task. The method includes receiving node information reported by a to-be-scheduled CDN node and constructing a plurality of training samples based on the node information, creating a support vector machine (SVM) model including a specified number of binary classifiers and determining the specified number based on a total number of the to-be-scheduled CDN nodes, performing a plurality of rounds of training to the SVM model by using the plurality of constructed training samples and generating correspondingly a weak classifier after each round of the training, where the weak classifier has a weight value, and combining the weak classifiers into a final classifier based on the weight values of the weak classifiers and scheduling a received new request task among the to-be-scheduled CDN nodes using the final classifier.

To achieve the above purpose, another aspect of the present disclosure provides a scheduling center server. The scheduling center server includes a training sample construction unit configured to receive node information reported by to-be-scheduled CDN nodes and construct a plurality of training samples based on the node information, an SVM model creation unit configured to create an SVM model including a specified number of binary classifiers, where the specified number is determined based on a total number of the to-be-scheduled CDN nodes, an iterative training unit configured to perform a plurality of rounds of training to the SVM model by using the plurality of constructed training samples and generate a weak classifiers correspondingly after each round of the training, where the weak classifier has a weight value, and a task scheduling unit configured to combine the weak classifiers into a final classifier based on the weight value of each of the weak classifiers and to schedule a received new request task among the to-be-scheduled CDN nodes using the final classifier.

To achieve the above purpose, another aspect of the present disclosure provides the scheduling center server. The scheduling center server includes memory and a processor. The memory is configured to store computer programs. When the computer programs are executed by the processor, the scheduling method of the request task described above is implemented.

As such, in the technical solution provided in the present disclosure, a machine learning method may be used to perform trainings to various types of node information of the CDN nodes, so as to obtain a classifier capable of performing request task scheduling. Specifically, the scheduling center at the CDN may receive the node information reported by the plurality of to-be-scheduled CDN nodes and construct a plurality of training samples based on the node information. Subsequently, the SVM model containing the plurality of binary classifiers can be created, and then a plurality of rounds of training can be performed to the SVM model by using the training samples described above to generate the plurality of weak classifiers. The purpose of including the plurality of binary classifiers in the SVM model is to convert a multi-class classification problem into a plurality of binary classification problems, so as to smoothly perform the scheduling to more than two CDN nodes. After the plurality of weak classifiers are obtained, the individual weight values of the weak classifiers can be determined, and the plurality of weak classifiers are combined into the final classifier according to the determined weight values. The size of the weight values of each of the weak classifiers may represent the size of the role played by each of the weak classifiers in the final classifier. In this way, after the SVM model is trained through a large number of training samples, a precise final classifier can be obtained. When a new request task is subsequently received, the node information of each of the to-be-scheduled CDN nodes can be analyzed through the final classifier, so as to determine a target CDN node suitable for processing the new request task. In this way, the technical solution provided by this disclosure can comprehensively consider various aspects of the node information through a machine learning method, and through continuous corrections of the training samples, the final classifier with a sufficient accuracy can be generated, so as to improve scheduling precision of the request task.

## BRIEF DESCRIPTION OF THE DRAWINGS

To more clearly describe the technical solution in embodiments of the present disclosure, drawings used in descriptions of the embodiments are briefly introduced below. Apparently, the following described drawings are merely some embodiments of the present disclosure. For one of ordinary skill in the art, other drawings may be obtained without any creative effort based on these drawings.

FIG. 1 is a schematic diagram of a structure of a scheduling center server and CDN nodes according to an embodiment of the disclosure;

FIG. 2 is a flowchart of a scheduling method of a request task according to an embodiment of the disclosure;

FIG. 3 is a schematic diagram of a directed acyclic graph (DAG) model according to an embodiment of the disclosure;

FIG. 4 is a flowchart of a plurality of rounds of training according to an embodiment of the disclosure;

FIG. 5 is a schematic diagram of functional modules of a scheduling center server according to an embodiment of the disclosure; and

FIG. 6 is a schematic diagram of a structure of a scheduling center server according to an embodiment of the disclosure.

## DETAILED DESCRIPTION

To make purposes, technical solutions, and advantages of the present disclosure clearer, embodiments of the disclosure will be further described in detail below in conjunction with drawings.

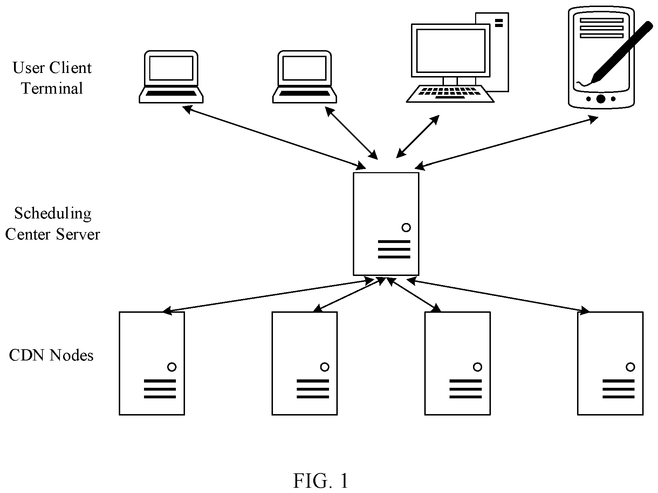

In accordance with the present disclosure, there is provided a scheduling method of a request task, which can be implemented by a scheduling center server of a content delivery network (CDN). With reference to FIG. 1, the scheduling center server can receive a request task for pulling a video live stream sent by a user client terminal and analyze node information of a current to-be-scheduled plurality of CDN nodes, so as to determine to which CDN node the request task should be scheduled.

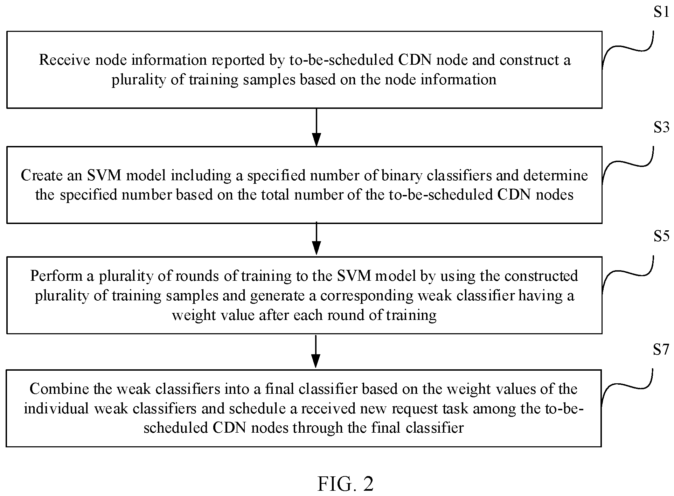

Specifically, with reference to FIG. 2, the scheduling method of the request task provided by the disclosure may include following processes.

At S1, node information reported by to-be-scheduled CDN nodes is received, and a plurality of training samples are constructed based on the node information.

The technical solution provided by the present disclosure may include a training phase and a predicting phase. For training phase, a plurality of training samples may be pre-constructed. Specifically, the to-be-scheduled plurality of CDN nodes may collect own node information and upload the collected node information to the scheduling center server. The node information may include various types of information, such as performance parameters, load parameters, remaining bandwidth, network delays, and bit rates of a live stream. Different information may be denoted using different physical quantities. Specifically, the performance parameter may be denoted by $A_i$, the load parameter may be denoted by $L_i$, the remaining bandwidth may be denoted by $B_i$, the network delay may be denoted by $P_i$, and the bit rate of the live stream may be denoted by $BR_i$. The subscript i can indicate the node information of the i-th to-be-scheduled CDN node.

In one embodiment, the to-be-scheduled CDN nodes can regularly report the node information at different times to the scheduling center server according to a specified time interval. In this way, the scheduling center server can collect the node information reported by the to-be-scheduled CDN nodes at different times and construct an information vector with the node information reported by each of the to-be-scheduled CDN nodes at a same time. The information vector may be expressed in the following way:

$$I = \left[ A_1, L_1, B_1, P_1, BR_1, A_2, L_2, B_2, P_2, BR_2 \ldots A_n, L_n, B_n, P_n, BR_n \right] ;$$

where $I$ denotes the information vector at current time, and the information vector may include the various types of node information sent by a number n of to-be-scheduled CDN nodes at the current time. In this way, at each different time, one information vector may be generated, and at different times, a plurality of information vectors can be obtained and constructed as the plurality of training samples. For example, in one embodiment, a number m of training samples may be constructed for the node information reported at a number m of different times, and each training sample may be represented by the information vector described above.

At S3, an SVM model is created including a specified number of binary classifiers, and the specified number is determined based on the total number of the to-be-scheduled CDN nodes.

In one embodiment, to complete a machine learning process, an SVM model may be created, which may perform an analysis to node information of a plurality of to-be-scheduled CDN nodes, so as to determine to which CDN node a request task should be scheduled at the moment. Therefore, the created SVM model is actually a multi-class classifier, and a classification number supported by the multi-class classifier is the same as the number of the to-be-scheduled CDN nodes. For example, there are currently 5 CDN nodes participating in scheduling, so the SVM model needs to select a suitable CDN node from the 5 CDN nodes. Therefore, the SVM model is equivalent to a 5-class classifier.

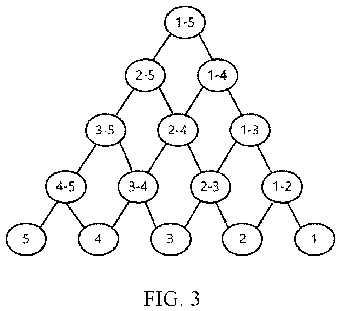

In one embodiment, the SVM model with a multi-class classification function may be constructed through the plurality of binary classifiers. Specifically, one multi-class classification problem may be divided into a plurality of binary classification problems through a directed acyclic graph (DAG) model. With reference to FIG. 3, for example, one CDN node is to be selected from 5 CDN nodes, and labels of these 5 CDN nodes may be from 1 to 5. In FIG. 3, a problem, including selecting one from five, may be converted into 10 problems, each including selecting one from two, where 1-5 in FIG. 3 indicates that a CDN node is selected from the CDN nodes labeled 1 and 5. The paired numbers in other circles may be deduced accordingly. In this way, after completing the problems of selecting one from two in a current layer, the problems of selecting one from two are proceeded in a next layer according to a selection result. Finally, one label of the five labels is obtained, and the CDN node corresponding to the obtained final label may be the CDN node to which the request task should be scheduled.

In one embodiment, the SVM model may include the specified number of binary classifiers, and the specified number has a certain correlation with the total number of the to-be-scheduled CDN nodes. Specifically, according to the total number of the to-be-scheduled CDN nodes, a first item and a last item in an arithmetic sequence are determined at first. The first item of the arithmetic sequence may be 1, and the last item may be q-1, where q denotes the total number of the to-be-scheduled CDN nodes. Then, based on the determined first and last items, the sum of the arithmetic sequence may be calculated, and the calculated sum of the arithmetic sequence may be used as the specified number. In a practical application example, the specified number may be determined according to the following formula:

$$P = \frac{q(q-1)}{2} ;$$

where, $P$ denotes the specified number, and $q$ is the total number of the to-be-scheduled CDN nodes.

In this way, in practical applications, the total number of the CDN nodes participating in scheduling can be counted in advance, and then the number of the binary classifiers included in the SVM model can be calculated according to the above formula. Finally, a layer-by-layer arrangement of these binary classifiers can be constructed according to the DAG model.

At S5, a plurality of rounds of training is performed to the SVM model by using the plurality of constructed training samples, and after each round of training, a corresponding weak classifier is generated. The weak classifier has a weight value.

In one embodiment, when the SVM model is constructed, the plurality of rounds of the training may be performed to the SVM model by using the plurality of training samples. When the training is performed by using the training samples, a corresponding weight value is set for each of the training samples. During the first training, each of the training samples may be assigned with a same initial weight value. Specifically, the initial weight value may be, e.g., 1 / m, where m denotes the total number of the training samples. In this way, the sum of the weight values of these training samples can be ensured to be 1.

In one embodiment, after an initial weight value is assigned to each of the training samples, the SVM model can be trained by using the training samples having the initial weight values. The purpose of the training is to allow training results of the training samples through the SVM model to approximate standard results of the training samples. The standard results of the training samples may be obtained by the scheduling center server at the same time when the scheduling center server receives node information. Specifically, the node information used in constructing the training samples can be historical information of a completed request task scheduling. For example, at a certain historical moment, the scheduling center server may receive a request task from a user client terminal, and after a series of calculations, may schedule the request task to a CDN node labeled 5, and this scheduling was subsequently proved to be correct. The scheduling center server can query the node information corresponding to the historical time moment from the node information reported by the CDN nodes and construct the above-mentioned information vector according to the queried node information to obtain the training sample at the historical time moment. At the same time, the training sample already has the standard result: that the request task is scheduled to the CDN node labeled 5. Therefore, after performing the training to the SVM model by using the training sample, if the result output by the SVM model is also the CDN node labeled 5, the training result of the training sample is the same as the standard result. If the training result output by the SVM model is not the CDN node labeled 5, the training result of the training sample is not the same as the standard result. In this scenario, the training process needs to be corrected, so that when another training is performed after the correction, the training result can be the same as the standard result.

In one embodiment, after performing the training to the SVM model by using the training samples with the initial weight values, an error function of the current training can be determined according to a deviation between the training result and the standard result of the training samples. Specifically, for the current training sample of the plurality of training samples, a determination value of the current training sample can be determined. If the training result of the current training sample is the same as the standard result, the determination value may be set to be 0, and if the training result of the current training sample is different from the standard result, the determination value may be set to be 1. Then, a product of the initial weight value of the current training sample and the determination value may be calculated, so as to obtain an error contribution value corresponding to the current training sample. In the above-mentioned manner, the error contribution values corresponding to the individual training samples can be obtained with the calculations. Finally, the sum of the error contribution values corresponding to the training samples can be used as the error function. In a practical application example, the error function can be determined according to the following formula:

$$er = \sum_{i=1}^{m} W_0(i) f(G(I_i) \neq y_i) \, ;$$

where $er$ denotes the error function, $I_i$ denotes an i-th training sample, $W_0(i)$ denotes the initial weight value corresponding to the i-th training sample, $G(I_i)$ denotes the training result of the i-th training sample at the current round, $y_i$ denotes the standard result of the i-th training sample, $m$ denotes a number of the training samples, if * is true, $f(*) = 1$, and if * is not true, $f(*) = 0$.

As such, after the training of the current round, the corresponding error function is actually the sum of the weight values of the training samples that have been misclassified.

In one embodiment, the SVM model after the training of the current round can be seen as a weak classifier. After the training of the current round, the weight value of each training sample can be adjusted according to the above-mentioned error function, so that a training process of a next round can be performed by using the training samples with the adjusted weight values. At the same time, a weight value can be set for the weak classifier after the training of the current round, and the weight value of the weak classifier can represent the influence of the weak classifier for the final classification result. Specifically, the weight value of the weak classifier corresponding to the current round can be determined according to the following formula:

$$\alpha = \frac{1}{2} \ln \frac{1-er}{er} \, ;$$

where $\alpha$ denotes the weight value of the weak classifier corresponding to the current round.

In addition, a new weight value may be assigned to each of the training samples according to the following formula:

$$W_1(i) = \frac{W_0(i)}{Z} \times \begin{cases} e^{-\alpha} & G(I_i) = y_i \\ e^{\alpha} & G(I_i) \neq y_i \end{cases} \, ;$$

where $W_1(i)$ denotes the new weight value assigned to the i-th training sample, $Z$ denotes a normalization factor, and the normalization factor ensures that the sum of the individual new weight values is always equals to 1.

In this way, according to the error function, the weight value of a weak classifier in the current round of training may be determined, and the new weight value is reassigned to each of the training samples based on the determined weight value of the weak classifier. Therefore, the next round of the training may be performed to the SVM model by using the training samples with the assigned new weight values.

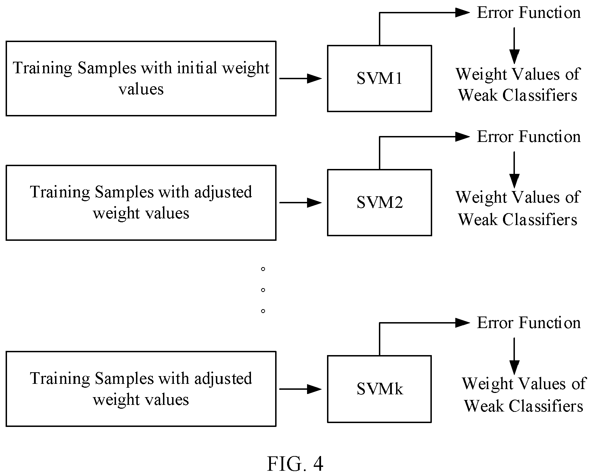

With reference to FIG. 4, a next round of a training process is the same as the content described above, except that weight values of training samples are different. After the next round of training is completed, an error function may be calculated similarly again, and a weight value of a weak classifier in the next round of training is determined according to the error function. The new weight values are reassigned to the training samples again, and so on, until all the training processes are completed.

At S7, based on the weight values of the individual weak classifiers, the weak classifiers are combined into a final classifier, and a received new request task is scheduled among the to-be-scheduled CDN nodes through the final classifier.

In one embodiment, after all the training are completed, the individual weak classifiers can be combined into the final classifier through a weighted summation manner.

In one embodiment, after the above training phase is completed, a predicting phase can be entered. Specifically, when the scheduling center server receives a new request task, the node information of the individual to-be-scheduled CDN nodes can be collected in real time. Based on the method for constructing an information vector, test samples are constructed according to the node information. Then, the test samples can be input to the final classifier to obtain a node label for indicating a target CDN node. The node label can be, e.g., the label of the CDN node, then the scheduling center server can schedule the new request task to the target CDN node.

If a deviation is observed subsequently between a current prediction result and an actual result that should be scheduled, the current prediction result can be used as a new training sample, the actual result that should be scheduled is used as the standard result for the training sample, and the training is performed to the final classifier again to improve classification precision of the final classifier. As such, for a scheduling error in practical applications, the training can be performed to the final classifier through machine learning methods to improve the classification precision of the final classifier.

In one embodiment, after an SVM model receives training samples, the training samples can be classified through a classification hyperplane. Specifically, the expression of the SVM model can be expressed as:

$$f(x) = w \bullet \phi(x) + b \, ;$$

where $f(x) = 0$ denotes the classification hyperplane, and $f(x)$ greater than 0 or equal to 0 represents the different classification results. $X$ denotes the input training samples, $\phi(x)$ denotes a certain mapping calculation to the training samples, and $W$ and $b$ denote two factors.

In practical applications, to solve the function above, the expression described above can be converted as the following solution with restrictions:

$$\begin{cases} \min \dfrac{1}{2}\|w\|^2 + C\sum_{i=1}^{l} \xi_i + \xi_i^* \\ s.t. \begin{cases} y_i - w\phi(x) - b \leq \xi_i + \xi_i^*, i = 1, 2, \cdots, l \\ w\phi(x) + b - y_i \leq \xi_i + \xi_i^*, i = 1, 2, \cdots, l \\ \xi_i \geq 0, \xi_i^* \geq 0 \end{cases} \end{cases};$$

where $\xi_i$ denotes a relaxation variate, $C$ denotes a penalty factor, $y_i$ denotes the standard result of the training sample, and $l$ denotes a number of elements included in the training sample.

Further, a kernel function can be used to map the input training samples to a high-dimensional space. The kernel function may be a radial basis kernel function, which is mathematically expressed as:

$$K(x_i, x_j) = \exp\left(-\frac{\|x_i - x_j\|^2}{2\sigma^2}\right);$$

where $x_i$ denotes an i-th element of the training sample, $x_j$ denotes an j-th element of the training sample, and $\sigma$ denotes an adjustable preset constant.

Subsequently, lagrangian multipliers can be introduced to transform the above formula into a dual problem and obtain a dual expression as follows:

$$\begin{cases} \max\left[ -\frac{1}{2}\sum_{i=1}^{l}\sum_{j=1}^{l}\left(a_i - a_i^*\right)\left(a_j - a_j^*\right)K\left(x_i, x_j\right) - \sum_{j=1}^{l}\left(a_i + a_i^*\right)\varepsilon + \sum_{j=1}^{l}\left(a_i - a_i^*\right)y_i \right] \\ s.t.\begin{cases} \sum_{j=1}^{l}\left(a_i - a_i^*\right) = 0 \\ 0 \le a_i \le C \\ 0 \le a_i^* \le C \end{cases} \end{cases} ;$$

when the optimal solution is $\alpha = [\alpha_1, \alpha_1, \cdots, \alpha_l]$, $a^* = [a_1^*, a_2^*, \cdots, a_l^*]$, parameters can be obtained as follows, where $N_{nsv}$ denotes a number of support vectors:

$$w^* = \sum_{i=1}^{l}\left(a_i - a_i^*\right)\phi\left(x_i\right);$$

$$b^* = \frac{1}{N_{nsv}}\left\{ \sum_{0<a_i<C}\left[ y_i - \sum_{x_i\in SV}\left(a_i - a_i^*\right)K\left(x_i, x_j\right) - \varepsilon \right] + \sum_{0<a_i<C}\left[ y_i - \sum_{x_j\in SV}\left(a_j - a_j^*\right)K\left(x_i, x_j\right) + \varepsilon \right] \right\};$$

finally, a classification expression of the SVM model can be:

$$f\left(x\right) = \sum_{i=1}^{l}\left(a_i - a_i^*\right)K\left(x_i, x\right) + b^*;$$

where $f(x)$ denotes the classification expression of the SVM model, $K(x_i, x)$ denotes the radial basis kernel function, $x_i$ is the i-th element of the training sample, $x$ is the input training samples, $b^*$ denotes a redundancy factor, $a_i$ denotes an i-th element of the lagrangian multipliers, $a_i^*$ denotes a conjugate transpose of $a_i$, $l$ is the total number of the elements of the training samples, $sv$ denotes a support vector domain, $N_{nsv}$ is the number of the support vectors, $C$ is the penalty factor, $y_i$ denotes the standard result of the i-th training sample, and $\varepsilon$ denotes a real part of the relaxation variate.

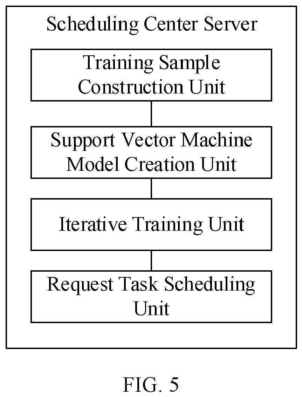

With reference to FIG. 5, in accordance with the present disclosure, there is provided a scheduling center server, which includes: a training sample construction unit configured to receive node information reported by to-be-scheduled CDN nodes and construct a plurality of training samples based on the node information, an SVM model creation unit configured to create an SVM model including a specified number of binary classifiers, where the specified number is determined based on a total number of the to-be-scheduled CDN nodes, an iterative training unit configured to perform a plurality of rounds of training to the SVM model by using the plurality of constructed training samples and generate a weak classifier correspondingly after each round of the training, where the weak classifier has a weight value, and a request task scheduling unit configured to combine the individual weak classifiers into a final classifier based on the weight values of the individual weak classifiers and schedule a received new request task among the to-be-scheduled CDN nodes using the final classifier.

In an embodiment, the iterative training unit includes an initial weight value assignment module configured to pre-assign an initial weight value to each of the training samples and perform the training to the SVM model by using the plurality of training samples having the initial weight values, an error function determination module configured to determine an error function of the current round of the training according to a deviation between a training result and a standard result of the training samples, a weight value reassignment module configured to determine a weight value of a weak classifier corresponding to the current round of the training according to the error function and reassign a new weight value to each of the training samples based on the weight value of the determined weak classifier, and a continuous training module configured to perform a next round of training to the SVM model by using the training samples assigned with the new weight values.

In one embodiment, the request task scheduling unit includes a node information collection module configured to collect node information of individual CDN nodes when receiving a new request task and construct test samples according to the collected node information, a node label prediction module configured to input the test samples to the final classifier to obtain a node label for indicating a target CDN node, a scheduling module configured to schedule the new request task to the target CDN node.

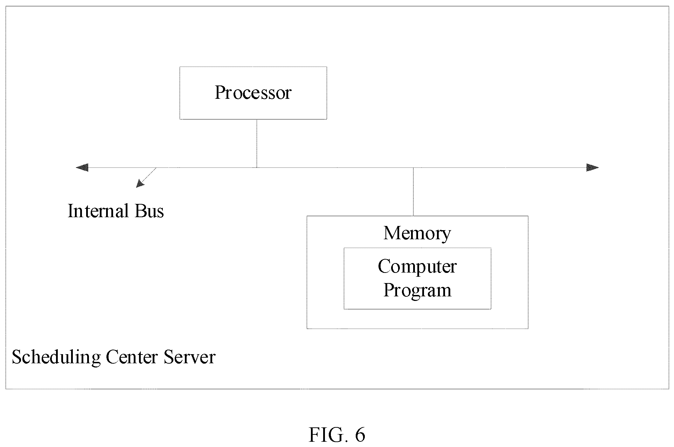

With reference to FIG. 6, in accordance with the present disclosure, there is provided a scheduling center server, which includes memory and a processor. The memory is configured to store a computer program, which is executed by the processor to implement the scheduling method of a request task described above. Specifically, as shown in FIG. 6, at the hardware level, the scheduling center server includes a processor, an internal bus, and memory. The memory may include random access memory (RAM) and non-volatile memory. The processor reads the corresponding computer program into the memory and then run the computer program. Those of ordinary skill in the art should understand that the structure shown in FIG. 6 is merely illustrative and does not limit the structure of the recognition device described above. For example, a scheduling center server may also include more assemblies or less assemblies than the scheduling center server shown in FIG. 6. For example, other processing hardware may be included e.g., a graphics processing unit (GPU), or a configuration different from the configuration shown in FIG. 6. In addition to a software implementation, the present disclosure does not exclude other implementations, such as a logic device or a combination of software and hardware, etc.

In one embodiment, the processor may include a central processing unit (CPU) or a graphics processing unit (GPU), and may also include other microcontroller units, logic gate circuits, integrated circuits, etc., capable of logical processing, or suitable combinations thereof. In one embodiment, the memory may be a memory device for storing information. In a digital system, a device that can store binary data can be memory. In an integrated circuit, a circuit with a storage function without a physical form may also be memory. When implemented, the memory can also be implemented by means of a cloud storage. The specific implementation method is not limited in this specification.

It should be noted that in accordance with the present disclosure, there is provided the scheduling center server, of which the specific implementation can be made referred to the description of the method embodiments and will not be described here one by one.

It can be seen from above, the technical solution provided by the present disclosure can perform the training to the various types of node information of the CDN nodes through the machine learning methods, so as to obtain the classifier capable of the request task scheduling. Specifically, the scheduling center of the CDN can receive the various types of node information reported by the to-be-scheduled plurality of CDN nodes and construct the plurality of training samples based on the node information. The SVM model, which includes the plurality of binary classifiers, can be constructed, and the plurality of rounds of the training is performed to the SVM model by using the training samples described above to generate the plurality of weak classifiers. The purpose of the SVM model including the plurality of binary classifiers is to convert a multi-class classification problem into a plurality of binary classification problems, so as to perform the scheduling smoothly to the two or more CDN nodes. After obtaining the plurality of weak classifiers, the weight value of each weak classifier can be determined, and the plurality of weak classifiers are combined into the final classifier according to the determined weight values. The sizes of the weight values of each of the weak classifiers may represent the size of the role played by each of the weak classifiers in the final classifier. In this way, after performing the training to the SVM model with a large number of training samples, a precise final classifier can be obtained. When receiving a new request task subsequently, the node information of each of the to-be-scheduled CDN nodes can be analyzed by the final classifier to determine a target CDN node suitable for processing the new request task. In this way, the technical solution of the disclosure can, through the machine learning methods, comprehensively consider various aspects of the node information, and through continuous corrections of the training samples, generate the final classifier with a sufficient precision to improve the scheduling precision of the request tasks.

Through the description of the method embodiment above, those of skill in the art should clearly understand that the embodiments may be implemented by software with a necessary general hardware platform, and also may implemented through hardware. Based on such an understanding, the above-mentioned technical solution essentially or a part that contributes to the prior technology can be realized in the form of a software product. The software product may be stored in a computer-readable storage medium, such as ROM / RAM, magnetic disks, CD-ROM, etc., including instructions for causing a computer device (which may be a personal computer, a server, or a network device, etc.) to execute the methods described in the embodiments or certain parts of the embodiments.

In the present disclosure, only preferred embodiments are described above and are not used to limit the present disclosure. Any modifications, equivalent replacements, or improvements made within the spirit and principles of the present disclosure should be within the scope of the present disclosure.

**Claims**

1. A scheduling method of a request task, comprising:

   receiving node information reported by to-be-scheduled CDN nodes and constructing a plurality of training samples based on the node information;
   creating a support vector machine (SVM) model including a specified number of binary classifiers, wherein the specified number is determined based on a total number of the to-be-scheduled CDN nodes;
   performing a plurality of rounds of training to the SVM model by using the plurality of constructed training samples, and generating a weak classifier correspondingly after each round of the training, wherein the weak classifier has a weight value; and
   combining weak classifiers corresponding to the plurality of rounds of the training into a final classifier based on a weight value of each of the weak classifiers and scheduling a received new request task among the to-be-scheduled CDN nodes using the final classifier.

2. The method of claim 1, wherein:

   the node information includes at least one of performance parameters, load parameters, remaining bandwidth, network delays, or bit rates of a live stream; and
   correspondingly, constructing the plurality of training samples includes:

      collecting the node information reported by the to-be-scheduled CDN nodes at different times and constructing the node information reported by each of the to-be-scheduled CDN nodes at a same time into an information vector; and
      using information vectors constructed at different times as the plurality of constructed training samples.

3. The method of claim 1, wherein the specified number is determined according to following manners:

   determining a first element and a last element of an arithmetic sequence according to the total number of the to-be-scheduled CDN nodes; and
   calculating a sum of the arithmetic sequence based on the first element and the last element and using the sum of the arithmetic sequence as the specified number.

4. The method of claim 1, wherein performing the plurality of rounds of the training to the SVM model by using the plurality of constructed training samples includes:

   pre-assigning an initial weight value to each of the plurality of training samples and performing trainings to the SVM model using the plurality of training samples with initial weight values;
   determining an error function of a current round of training according to a deviation between a training result and a standard result of the plurality of training samples;
   determining a weight value of a weak classifier corresponding to the current round according to the error function and reassigning a new weight value for each training sample based on the weight value of the determined weak classifier; and
   performing a next round of training to the SVM model using training samples assigned with new weight values.

5. The method of claim 4, wherein the error function is determined according to a following manner:

   for a current training sample of the plurality of training samples, a determination value of the current training sample is determined;
   if a training result of the current training sample is a same as a standard result, the determination value is set to be 0, and if the training result of the current training sample is different from the standard result, the determination value is set to be 1;
a product of an initial weight value of the current training sample and the determination value is calculated to obtain an error contribution corresponding to the current training sample; and
a sum of the error contribution corresponding to each of the plurality of training samples is used as the error function.

**6.** The method of claim 4 or claim 5, wherein the error function is determined according to following formula:

$$er = \sum_{i=1}^{m} W_0(i) f(G(I_i) \neq y_i)$$

;

where $er$ denotes the error function, $I_i$ denotes an i-th training sample, $W_0(i)$ denotes a weight value corresponding to the i-th training sample, $G(I_i)$ denotes a training result of the i-th training sample at the current round, $y_i$ denotes a standard result of the i-th training sample, $m$ denotes a number of the plurality of training samples, if * is true, $f(*)$ = 1, and if * is not true, $f(*)$ = 0.

**7.** The method of claim 6, wherein the weight value of the weak classifier is determined according to a following formula:

$$\alpha = \frac{1}{2} \ln \frac{1-er}{er}$$ ;

where $\alpha$ denotes the weight value of the weak classifier corresponding to the current round;
correspondingly, the new weight value is assigned to each of the plurality of training samples according to a following formula:

$$W_1(i) = \frac{W_0(i)}{Z} \times \begin{cases} e^{-\alpha} & G(I_i) = y_i \\ e^{\alpha} & G(I_i) \neq y_i \end{cases}$$ ;

where $W_1(i)$ denotes a new weight value of the i-th training sample, and Z denotes a normalization factor.

**8.** The method of claim 1, wherein scheduling the received new request task among the to-be-scheduled CDN nodes using the final classifier includes:

when receiving the new request task, collecting the node information of each of the to-be-scheduled CDN nodes and constructing test samples according to the collected node information;
inputting the test samples into the final classifier to obtain a node label for indicating a target CDN node; and
scheduling the new request task to the target CDN node.

**9.** The method of claim 1, wherein a classification expression of the SVM model is:

$$f(x) = \sum_{i=1}^{l} \left( a_i - a_i^* \right) K\left( x_i, x \right) + b^*$$ ;

where $f(x)$ denotes the classification expression of the SVM model, $K(x_i, x)$ denotes a radial basis function, $x_i$ denotes an i-th element of the plurality of training samples, $x$ denotes an input training sample, $b^*$ denotes a redundancy factor, $a_i$ denotes an i-th element of optimal Lagrangian multipliers, $a_i^*$ denotes a conjugate transpose of $a_i$, and $l$ denotes a total number of the plurality of training samples.

**10.** The method of claim 9, wherein the redundancy factor is expressed according to a following formula:

$$b* = \frac{1}{N_{nsv}} \left\{ \sum_{0<a_i<C} \left[ y_i - \sum_{x_i \in SV} \left( a_i - a_i^* \right) K\left( x_i, x_j \right) - \varepsilon \right] + \sum_{0<a_i<C} \left[ y_i - \sum_{x_j \in SV} \left( a_j - a_j^* \right) K\left( x_i, x_j \right) + \varepsilon \right] \right\} \; ;$$

where $sv$ denotes a support vector domain, $N_{nsv}$ denotes number of support vectors, C denotes a penalty factor, $y_i$ denotes a standard result of an i-th training sample, and $\varepsilon$ denotes a real part of a relaxation variant.

**11.** The method of claim 9, wherein the radial basis function is expressed according to a following formula:

$$K\left( x_i, x_j \right) = \exp\left( -\frac{\left\| x_i - x_j \right\|^2}{2\sigma^2} \right);$$

where $\sigma$ denotes a preset constant.

**12.** A scheduling center server, comprising:

a training sample construction unit, configured to receive node information reported by to-be-scheduled CDN nodes and construct a plurality of training samples based on the node information;
a support vector machine (SVM) model creation unit, configured to create an SVM model including a specified number of binary classifiers, where the specified number is determined based on a total number of the to-be-scheduled CDN nodes;
an iterative training unit, configured to perform a plurality of rounds of training to the SVM model by using the plurality of constructed training samples and generate a weak classifier correspondingly after each round of the training, wherein the weak classifier has a weight value; and
a request task scheduling unit, configured to combine weak classifiers into a final classifier based on a weight value of each of the weak classifiers and schedule a received new request task among the to-be-scheduled CDN nodes using the final classifier.

**13.** The scheduling center server of claim 12, wherein the iterative training unit includes:

an initial weight value assignment module, configured to pre-assign an initial weight value to each of the training samples and perform the training to the SVM model by using the training samples having the initial weight values;
an error function determination module, configured to determine an error function of the current round of the training according to a deviation between a training result and a standard result of the training samples;
a weight value reassignment module, configured to determine a weight value of a weak classifier corresponding to the current round according to the error function and reassign a new weight value for each of the training samples based on the weight values of the determined weak classifiers; and
a continuous training module, configured to perform a next round of training to the SVM model by using the training samples assigned with the new weight values.

**14.** The scheduling center server of claim 12, wherein the request task scheduling unit includes:

a node information collection module, configured to collect the node information of each of the to-be-scheduled CDN nodes, when receiving the new request task, and construct test samples according to the collected node information;
a node label prediction module, configured to input the test samples to the final classifier to obtain a node label for indicating a target CDN node; and
a scheduling module, configured to schedule the new request task to the target CDN node.

**15.** A scheduling center server, wherein the scheduling center server comprises a memory and a processor, the memory is configured to store a computer program, which is executed by the processor to implement any method described in claims 1 to 11.

User Client
Terminal

Scheduling
Center Server

CDN Nodes

FIG. 1

S1

Receive node information reported by to-be-scheduled CDN node and construct a plurality of training samples based on the node information

S3

Create an SVM model including a specified number of binary classifiers and determine the specified number based on the total number of the to-be-scheduled CDN nodes

S5

Perform a plurality of rounds of training to the SVM model by using the constructed plurality of training samples and generate a corresponding weak classifier having a weight value after each round of training

S7

Combine the weak classifiers into a final classifier based on the weight values of the individual weak classifiers and schedule a received new request task among the to-be-scheduled CDN nodes through the final classifier

FIG. 2

FIG. 3

Training Samples with initial weight values → SVM1 → Error Function → Weight Values of Weak Classifiers

Training Samples with adjusted weight values → SVM2 → Error Function → Weight Values of Weak Classifiers

Training Samples with adjusted weight values → SVMk → Error Function → Weight Values of Weak Classifiers

FIG. 4

Scheduling Center Server

Training Sample
Construction Unit

Support Vector Machine
Model Creation Unit

Iterative Training Unit

Request Task Scheduling
Unit

FIG. 5

Processor

Internal Bus

Memory

Computer
Program

Scheduling Center Server

FIG. 6

**INTERNATIONAL SEARCH REPORT**

| International application No. |
| --- |
| **PCT/CN2018/120101** |

**A. CLASSIFICATION OF SUBJECT MATTER**

H04L 29/08(2006.01)i

According to International Patent Classification (IPC) or to both national classification and IPC

**B. FIELDS SEARCHED**

Minimum documentation searched (classification system followed by classification symbols)

H04L; H04W; G06K

Documentation searched other than minimum documentation to the extent that such documents are included in the fields searched

Electronic data base consulted during the international search (name of data base and, where practicable, search terms used)

CNABS, CNTXT, CNKI: 内容分发网络, CDN, 分类器, SVM, 支持向量机, 权重, 训练, 向量, 序列; VEN, USTXT, EPTXT, WOTXT: content delivery network, CDN, classifier, SVM, support vector machine, weight, training, vector, sequence

**C. DOCUMENTS CONSIDERED TO BE RELEVANT**

| Category* | Citation of document, with indication, where appropriate, of the relevant passages | Relevant to claim No. |
| --- | --- | --- |
| L | CN 109547546 A (WANGSU SCIENCE AND TECHNOLOGY CO., LTD.) 29 March 2019 (2019-03-29) same applicant, same priority data, relating same invention | 1-15 |
| A | CN 101442561 A (NANJING UNIVERSITY OF POSTS AND TELECOMMUNICATIONS) 27 May 2009 (2009-05-27) description, p. 4, line 18 to p. 8, line 10, and figure 2 | 1-15 |
| A | CN 106650806 A (PEKING UNIVERSITY SHENZHEN GRADUATE SCHOOL) 10 May 2017 (2017-05-10) entire document | 1-15 |
| A | CN 106375452 A (HOHAI UNIVERSITY) 01 February 2017 (2017-02-01) entire document | 1-15 |
| A | WO 2018200112 A1 (ELASTICSEARCH B V) 01 November 2018 (2018-11-01) entire document | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 May 2019** | **28 May 2019** |

| Name and mailing address of the ISA/CN | Authorized officer |
| --- | --- |
| **National Intellectual Property Administration, PRC (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/120101**

| Patent document cited in search report | | | Publication date (day/month/year) | Patent family member(s) | | | Publication date (day/month/year) |
|---|---|---|---|---|---|---|---|
| CN | 109547546 | A | 29 March 2019 | None | | | |
| CN | 101442561 | A | 27 May 2009 | None | | | |
| CN | 106650806 | A | 10 May 2017 | WO | 2018107760 | A1 | 21 June 2018 |
| CN | 106375452 | A | 01 February 2017 | None | | | |
| WO | 2018200112 | A1 | 01 November 2018 | US | 2018316707 | A1 | 01 November 2018 |

Form PCT/ISA/210 (patent family annex) (January 2015)